# EUROPEAN PATENT APPLICATION

(11) **EP 2 103 343 A1**
(43) Date of publication of application: **23.09.2009**
(21) Application number: 09003840.7
(22) Date of filing: 17.03.2009
(51) Int. Cl.: B01D 71/02, C01B 31/02, C01B 31/08

(54) **Self-standing mesoporous carbon membrane**

(30) Priority: 17.03.2008 JP 2008067013
(71) Applicant: National Institute of Advanced Industrial Science and Technology, Tokyo 100-8921 (JP)
(72) Inventor: Kimijima, Kenichi, Tokyo 135-0064 (JP); Hayashi, Akari, Tokyo 135-0064 (JP); Yagi, Ichizou, Tokyo 135-0064 (JP)
(74) Representative: Forstmeyer, Dietmar

(57) **Abstract**

A self-standing mesoporous carbon membrane which is obtainable by combining the following steps and has an ordered mesoporous structure in which mesopores are oriented in a direction perpendicular to a surface plane:
(i) applying a mixture of a surfactant and a carbon precursor composed of a thermosetting resin precursor and a crosslinking agent therefor, to the surface of a substrate, to form a membrane of the mixture;
(ii) drying the membrane at 15 to 30°C under the atmospheric pressure;
(iii) heating the dried membrane, to cause polymerization of the carbon precursor;
(iv) baking to carbonize the polymerized membrane;
(v) peeling the baked and carbonized membrane from the substrate; and
(vi) baking further to carbonize the peeled carbon membrane that is self-standing.

## Description

### FIELD OF THE INVENTION

The present invention relates to a novel self-standing carbon membrane with an ordered mesoporous structure.

### BACKGROUND OF THE INVENTION

Generally, ordered mesoporous silica materials have a structure in which mesopores with pore diameter 2 to 50 nm are arranged two- or three-dimensionally in a narrow pore diameter distribution.

In general, these mesoporous silica materials are those synthesized by using the self-organization of a surfactant. Since the mesoporous silica material has a sharp pore diameter distribution and is provided with pores whose surfaces can be modified by various organic functional groups, various attempts are made to apply these mesoporous silica material to catalysts, filters, and various kinds of sensors.

In this manner, the mesoporous silica materials provide reaction sites different from those of micropores or macropores, and thus a specific reaction can be expected by using the mesoporous silica materials.

As mentioned above, the mesoporous silica material is one having a large possibility as reaction sites. It is however necessary that the mesoporous silica material itself have electric conductivity in order to utilize it as the reaction site (electrode material) of an electrochemical reaction.

However, generally, a silica material does not have electric conductivity enough to run an electrode reaction. Further, mesoporous silica has less crystallinity and it is therefore known that it is relatively nonresistant to heat and acid or alkali conditions. Therefore, mesoporous silica is under many restrictions to utilize it as a reaction site.

On the other hand, mesoporous carbon has a high electric conductivity, and high physical and chemical stability, and there is less limitation to its application. It is known that, when, for example, mesoporous carbon particles having ordered mesopores are used as a catalyst support of a polymer electrolyte fuel cell (PEFC), the fuel cell exhibits electrochemical characteristics different from those obtained when using a support having none of mesopores or ordered mesopores.

In the meantime, hitherto, such mesoporous carbon is generally prepared by synthesizing a mesoporous silica template having an ordered structure and by transferring using the template as a template via the CVD method (JP-A-2006-335596 ("JP-A" means unexamined published Japanese patent application)).

In that case, rod-like carbon precursors are formed in pore portions of mesoporous silica and are put into such a state that it is bound by carbon rods. In other words, the portion, called mesopores, of the mesoporous carbon constitutes the wall of the original template, so that even if the pore diameter of the template is changed, this has a small influence on the thickness of the wall, with the result that only a mesoporous carbon having a pore diameter of about 2 to 3 nm can be produced.

A method of forming, on a substrate, a carbon membrane having mesopores is proposed, the method involving a process in which a solution containing a surfactant and a carbon precursor is applied to the surface of a silicon substrate and then, the thus-coated membrane is dried at a high temperature of 90°C (363K) and baked for carbonization, to thereby form a target carbon membrane having mesopores (JP-A-2005-314223).

However, the membrane obtained according to JP-A-2005-314223 is a non-self-standing one though it has mesopores, and there is no description in JP-A-2005-314223 concerning a method of preparing a self-standing mesoporous carbon membrane. Further, that method does not particularly refer to the direction of the mesopores, and has the drawbacks that, in general, a mesoporous carbon membrane in which the direction of the mesopores is parallel to the surface plane is only obtained and a mesoporous carbon membrane in which the direction of the mesopores is perpendicular to the surface plane direction is not obtained.

### SUMMARY OF THE INVENTION

The present invention is contemplated for providing a novel self-standing mesoporous carbon membrane with an ordered mesoporous structure in which mesopores are oriented in the direction perpendicular to the surface plane.

The inventors of the present invention, having studied keenly to solve the problems in the above, found that when a specific process is adopted in direct synthesis utilizing the self-organization of a surfactant and a carbon precursor, a novel self-standing mesoporous carbon membrane can be obtained which has an ordered mesoporous structure in which mesopores are oriented in a direction perpendicular to the surface plane. The present invention has attained based on this finding.

According to the present invention, there is provided the following means:
<1> A self-standing mesoporous carbon membrane which is obtainable by combining the following steps and has an ordered mesoporous structure in which mesopores are oriented in a direction perpendicular to a surface plane:
   (i) applying a mixture of a surfactant and a carbon precursor composed of a thermosetting resin precursor and a crosslinking agent therefor, to the surface of a substrate, to form a membrane of the mixture;
   (ii) drying the membrane at 15 to 30°C under the atmospheric pressure;
   (iii) heating the dried membrane, to cause polymerization of the carbon precursor;
   (iv) baking to carbonize the polymerized membrane;
   (v) peeling the baked and carbonized membrane from the substrate; and
   (vi) baking further to carbonize the peeled carbon membrane that is self-standing.
<2> The self-standing mesoporous carbon membrane according to the above <1>, wherein the substrate is porous alumina.
<3> The self-standing mesoporous carbon membrane according to the above <1>, wherein the thermosetting resin precursor is a phenol or its derivative and the crosslinking agent is an aldehyde or its derivative.
<4> A method of preparing a self-standing mesoporous carbon membrane, comprising the steps of:
   (i) applying a mixture of a surfactant and a carbon precursor composed of a thermosetting resin precursor and a crosslinking agent therefor, to the surface of a substrate, to form a membrane of the mixture;
   (ii) drying the membrane at 15 to 30°C under the atmospheric pressure;
   (iii) heating the dried membrane, to cause polymerization of the carbon precursor;
   (iv) baking to carbonize the polymerized membrane;
   (v) peeling the baked and carbonized membrane from the substrate; and
   (vi) baking further to carbonize the peeled carbon membrane that is self-standing,
wherein the self-standing mesoporous carbon membrane has an ordered mesoporous structure in which mesopores are oriented in a direction perpendicular to a surface plane.

The self-standing mesoporous carbon membrane of the present invention has an ordered mesoporous structure in which mesopores are oriented in a direction perpendicular to the surface plane, and thus the function specific to the mesopores is sufficiently exhibited. The self-standing mesoporous carbon membrane of the present invention is useful as, for example, a material of sensors and electrodes, a catalyst support, an adsorption material, and a separation membrane.

Further, the mesoporous carbon membrane of the present invention is a self-standing membrane which is different from a membrane formed on a substrate and is thus unlimited by the characteristics of a material of such a substrate (for example, heat resistance, physical resistance, resistance to chemicals, optical properties, dielectric constant, and magnetic permeability), enabling applications in wider fields.

Other and further features and advantages of the invention will appear more fully from the following description, appropriately referring to the accompanying drawings.

### BRIEF DESCRIPTION OF THE DRAWINGS

Fig. 1 is an optical photograph of a self-standing mesoporous carbon membrane of Example 1.
Fig. 2 is a scanning electron microscopy image (SEM image) of the self-standing mesoporous carbon membrane of Example 1.
Fig. 3 is a nitrogen adsorption isotherm of the self-standing mesoporous carbon membrane of Example 1.
Fig. 4 is a pore distribution curve of the self-standing mesoporous carbon membrane of Example 1.
Fig. 5 is a photograph of the observed section (cross section) of the self-standing mesoporous carbon membrane of Example 1.
Fig. 6 is a small angle XRD pattern of the self-standing mesoporous carbon membrane of Example 1.

### DETAILED DESCRIPTION OF THE INVENTION

The self-standing mesoporous carbon membrane of the present invention is characterized by that it is obtained by combining the following steps, i.e. conducting the steps from (i) to (vi) in this order and that it has a perpendicularly ordered mesopore structure, i.e. an ordered mesoporous structure in which mesopores are oriented in a direction perpendicular to a surface plane of the membrane:
(i) applying a mixture of a surfactant and a carbon precursor composed of a thermosetting resin precursor and a crosslinking agent therefor, to the surface of a substrate, to form a membrane of the mixture;
(ii) drying the membrane at 15 to 30°C under the atmospheric pressure;
(iii) heating the dried membrane, to cause polymerization of the carbon precursor;
(iv) baking to carbonize the polymerized membrane;
(v) peeling the baked and carbonized membrane from the substrate; and
(vi) baking further to carbonize the peeled carbon membrane that is self-standing.

In the present invention, the self-standing mesoporous carbon membrane means a carbon membrane which has mechanical strength enough to sustain its shape irrespective of the presence of a substrate, has electric conductivity, and is provided with ordered mesopores 2 to 50 nm in size.

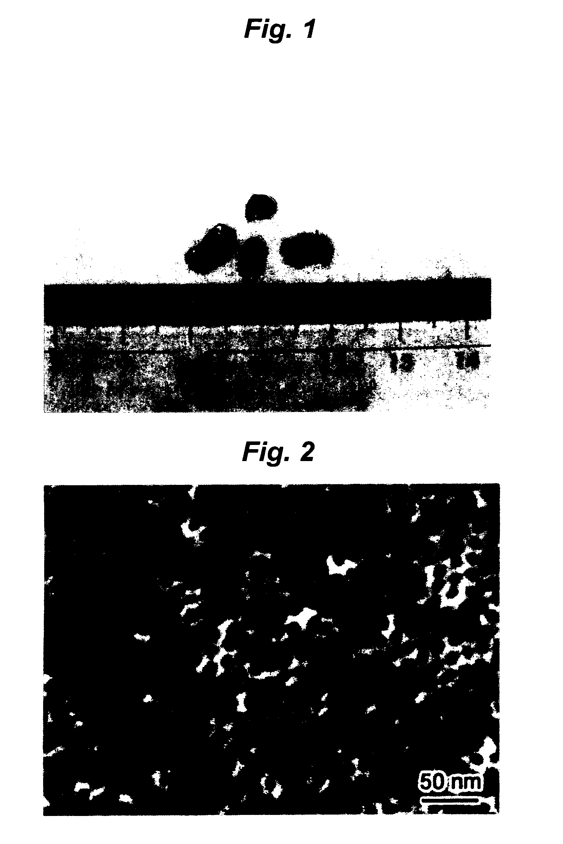

Further, the ordered mesoporous structure in which mesopores are oriented in a direction perpendicular to the surface plane means that the direction of the major axis of mesopores is parallel to the direction of the normal line of the surface plane of the membrane, and that the mesopores are located in a configuration with a given interval, for example, of a hexagonal structural arrangement, as shown in Fig. 2.

Such a specific self-standing mesoporous carbon membrane is synthesized by combining the above steps (i) to (vi) organically.

These steps will be explained one by one, hereinafter.

In the step (i), a mixture of a surfactant, and a carbon precursor composed of a thermosetting resin precursor and a crosslinking agent for the thermosetting resin precursor, is prepared, and the mixture is then applied to the surface of a substrate, to form a membrane of the mixture of the components.

Though no particular limitation is imposed on the surfactant, a nonionic surfactant is preferably used as the surfactant, from the viewpoint of its effective action on the self-organization with the carbon precursor.

As the nonionic surfactant, use may be made, for example, any of tri-block copolymers which have various polymerization ratios and a molecular weight of about 2,000 to about 13,000 and are consisted of polyethylene oxide-polypropylene oxide-polyethylene oxide (PEO-PPO-PEO) or polypropylene oxide-polyethylene oxide-polypropylene oxide (PPO-PEO-PPO) (for example, those available in the market under Pluronic (registered trademark) series, including Pluronic ® F-127 (trade name, manufactured by SIGMA-ALDRICH)); as well as polyoxyethylene alkyl ethers in which the alkyl group has 12 to 18 carbon atoms, polyoxyethylene octyl phenyl ether, polyoxyethylene nonyl phenyl ether, sorbitan monopalmitate, sorbitan monolaurate, sorbitan monostearate, sorbitan distearate, sorbitan monooleate, sorbitan sesquioleate, sorbitan trioleate, polyoxyethylenesorbitan monolaurate, polyoxyethylenesorbitan monopalmitate, polyoxyethylenesorbitan monostearate, polyoxyethylenesorbitan monooleate, polyethylene glycol monolaurate, polyethylene glycol monostearate, polyethylene glycol distearate, polyethylene glycol monooleate, oleic acid monoglyceride, stearic acid monoglyceride, polyoxyethylenelaurylamine, and polyoxyethylenestearylamine. Particularly, the tri-block copolymer or polyoxyethylene alkyl ether is preferably used in the reaction system in the present invention.

The carbon precursor for use in the present invention is composed of a thermosetting resin precursor and a crosslinking agent for the thermosetting resin precursor.

Any material may be used as the thermosetting resin precursor without any particular limitation as long as it is a carbon-containing compound, is polymerized in the presence of a surfactant and is made into a carbon mesoporous material after baking and carbonizing the polymerized product. It is preferable to use as the thermosetting resin precursor an organic compound with a benzene ring having an OH group thereon, in combination with as the crosslinking agent an organic compound having a CO group, from the viewpoint of undergoing polymerization readily.

As the organic compound with a benzene ring having an OH group thereon, use may be preferably made of any of phenols, such as phenol and resorcinol. Particularly, resorcinol is preferable.

Examples of the crosslinking agent include organic compounds having a CO group, for example, aldehydes, such as formaldehyde and acetaldehyde. Particularly, formaldehyde is preferable.

There is no particular limitation to the ratio of the carbon precursor to the surfactant to be used. When resorcinol and formaldehyde are used as the carbon precursor, this ratio by weight is preferably designed to be as follows: resorcinol : formaldehyde : surfactant = 1 : 0.31 : 0.034 to 2.3 (for example, 1 : 0.31 : 0.57).

Further, in the present invention, the mixture of the surfactant and the carbon precursor is preferably dissolved in an organic solvent/water prior to use. As the organic solvent, any material may be used without any particular limitation insofar as it dissolves the reaction materials or is miscible with water and, for example, alcohols are used. The organic solvent preferably used in the present invention is ethanol.

Further, it is preferable to use a reaction accelerator, such as triethyl orthoacetate, or a reaction aid.

Further, the polymerization of the thermosetting resin precursor is preferably conducted in the presence of a catalyst. As the catalyst, use can be preferably made, for example, of hydrochloric acid (HCl).

There is no particular limitation to the amounts to be used of the solvent (water, organic solvent), the reaction accelerator or reaction aid, and the catalyst.

Any substrate may be used as the substrate to be coated with the carbon precursor without any particular limitation as long as the resultant membrane is peelable from the substrate in the subsequent step (iii). Examples of the substrate include substrates made any one of alumina, porous alumina, quartz, sapphire, silicon, or carbon. Among these materials, it is most preferable to use porous alumina. Although this reason has not been clarified so far, it is presumed that the pores of the porous alumina have an influence on the vertical arrangement of the mesopores and a self-standing carbon membrane provided with vertically oriented and ordered mesopores are readily formed.

In the present invention, there is no particular limitation to the shape of the substrate, and the substrate may have a flat form or a curvature form.

Further, there is no particular limitation to a method of forming the membrane of the mixture of the carbon precursor and the surfactant, on the substrate, and use may be adopted, for example, of the dip coating method, the spin coating method, or the impregnation method.

Although no particular limitation is imposed on the temperature at which the membrane is formed, that is, the temperature at which the above membrane precursor is applied, and the temperature is preferably 20 to 25°C.

The step (ii) is a step of drying the membrane obtained above. This step is very important for the orientation of mesostructure. It is therefore necessary that the drying temperature be 15 to 30°C and preferably 20 to 25°C and the drying pressure be set to the atmospheric pressure. The drying time period is preferably set to be 6 to 24 hours and more preferably 12 to 15 hours.

If such a specific drying condition is not adopted, it is difficult to obtain a self-standing mesoporous carbon membrane having an ordered mesoporous structure in which mesopores are oriented in a direction perpendicular to the surface plane.

In this drying step, it is preferable to feed dry air by blowing, to keep a proper drying speed.

In the step (iii), the dried membrane obtained above is heated, to polymerize the carbon precursor. Specifically, in this step, the substrate with the precursor membrane dried in the step (ii) is heated, for example, at 100 to 120°C for 3 to 12 hours and preferably at 105°C for 6 hours, under an atmosphere in an inert gas oven, to polymerize the carbon precursor composed, for example, of resorcinol and formaldehyde. This step is carried out to fix a self-organized assembly (mesostructure) consisted of the block copolymer and the carbon precursor, which assembly has been generated in the course of the step (ii). As a result of this step, the carbon precursor is converted into a semitransparent orange polymer, and a substrate coated with the carbon precursor polymer membrane is obtained.

The step (iv) is a step performed to baking and carbonizing the polymerized membrane obtained above. In this step, the substrate coated with the polymer membrane obtained in the step (iii) is heated in an argon gas atmosphere, to cause a reaction associated with dissociation of oxygen atoms and hydrogen atoms in the self-organized assembly, thereby carbonizing the polymer membrane. This carbonization step is carried out, for example, by heating at a temperature rise rate of preferably 1 to 2°C/min up to 400°C from ambient temperature (20 to 30°C) and then by keeping the substrate at generally 300 to 400°C and preferably 400°C for 3 to 6 hours. Since the substrate heated at a rate as relatively low as 1 to 2°C/min, the membrane proceeds with carbonization while the self-organized assembly (mesostructure) obtained in the steps (ii) and (iii) is retained. This step brings about the result that the carbon precursor polymer membrane is changed to a deep brown to black carbon membrane.

The step (v) is carried out to peel the baked and carbonized membrane obtained above from the substrate. In this step, after the step (iv), the deep brown to black carbon membrane formed on the surface of the substrate is peeled from the surface of the substrate made, for example, of alumina. A self-standing carbon membrane is obtained through this step.

This peeling step may be carried out, for example, by a method in which the membrane is peeled by mechanical separation (removed physically from the substrate by tweezers (a pincette) or a razor) or by carrying out etching to remove the substrate.

The step (vi) is a step of further baking to carbonize the peeled self-standing carbon membrane. In this step, the self-standing carbon membrane obtained in the step (v) is heated, for example, at a temperature rise rate of 1 to 4°C/min up to 600 to 800°C under an argon gas atmosphere in a porcelain crucible and then retained at 600 to 800°C for 3 to 6 hours, to proceed with carbonization. Finally, the carbon mesoporous membrane is obtained as a black self-standing membrane. This step proceeds with the further carbonization of the self-standing carbon membrane and enhances the physical and chemical strength of the membrane, with the result a mesoporous carbon membrane having high electric conductivity is obtained. This step (vi) can be carried out at a higher temperature, e.g. 1,200°C, and the self-standing carbon membrane of the present invention has excellent heat resistance that can be resistant to baking and carbonization under such a high temperature.

The self-standing mesoporous carbon membrane that can be obtained according to the present invention has an ordered mesoporous structure in which mesopores are oriented in a direction perpendicular to the surface plane direction of the membrane. The diameter of the mesopores is 2 to 50 nm and preferably 5 to 20 nm. Although there is no particular limitation to the number and density of mesopores, the distance between mesopores (i.e. the distance between pore walls) is generally 10 nm to 25 nm. Further, although there is no particular limitation to the membrane thickness of the self-standing mesoporous carbon membrane that can be obtained according to the present invention, the membrane thickness is generally from about 30 µm to about 150 µm, preferably from about 90 µm to about 130 µm.

The present invention will be described in more detail based on the following examples, but the invention is not intended to be limited thereto.

### EXAMPLE

### Example 1

### (Synthesis of a carbon precursor)

The 1.65 g of resorcinol (manufactured by Wako Pure Chemical Industries Ltd.) was dissolved in a mixed solvent of 4.35 g of ultra pure water (Milli-Q quality) and 5.75 g of ethanol (manufactured by Wako Pure Chemical Industries Ltd.) and 0.15 mL of 5 M hydrochloric acid (manufactured by Wako Pure Chemical Industries Ltd.). To the resultant solution, 0.945 g of Pluronic ® F-127 (manufactured by SIGMA) was added, to dissolve the resultant mixture completely. Then, 1.2 g of triethyl orthoacetate (manufactured by Wako Pure Chemical Industries Ltd.) and 1.35 g of 37% formaldehyde (manufactured by Wako Pure Chemical Industries Ltd.) were added thereto, and the resultant mixture was stirred at about 30°C for 20 minutes, to obtain a carbon precursor.

### (Synthesis of carbon membrane)

To a porous alumina substrate film (manufactured by Whatman, pore size 200 nm, diameter 47 mm) placed in a porcelain evaporating dish, 4 ml of the above carbon precursor solution was added dropwise, followed by drying at ambient temperature (20°C) for 15 hours. The thus-dried precursor/alumina film composite was heated at 105°C for 6 hours in an inert gas oven filled with the air, to polymerize the carbon precursor consisted of resorcinol and formaldehyde.

The thus-obtained porous alumina film coated with the resultant polymerized carbon precursor was heated under an argon gas atmosphere. The heating was carried out, by heating the film at a temperature rise rate of 1°C/min up to 400°C from ambient temperature, and then by retaining the film at 400°C for 3 hours. After heating, the mesoporous carbon membrane formed on the surface of the porous alumina film was peeled from the alumina film along cleavage planes, thereby obtaining a self-standing mesoporous carbon membrane.

The thus-obtained self-standing carbon membrane was heated at a temperature rise rate of 2°C/min up to 600°C under an argon gas atmosphere in a porcelain crucible and then retained at 600°C for 3 hours, to proceed with further carbonization. Finally, the target mesoporous carbon membrane was obtained as a black self-standing membrane. The thus-obtained self-standing mesoporous carbon membrane had an area of about 20 mm² and a membrane thickness of about 110 µm.

### (SEM observation of the mesoporous carbon membrane)

The thus-obtained mesoporous carbon membrane was observed by a field emission scanning electron microscope (trade name: JSM-7000F, manufactured by JEOL, Ltd.), to find that highly ordered mesopores with pore diameter 7 to 8 nm and wall distance 12 to 14 nm were observed (Fig. 2). Further, the mesopores were oriented in a direction perpendicular to the surface plane. Fig. 1 is an optical photograph of the mesoporous carbon membrane observed.

### (Measurement of adsorption of nitrogen to the mesoporous carbon membrane)

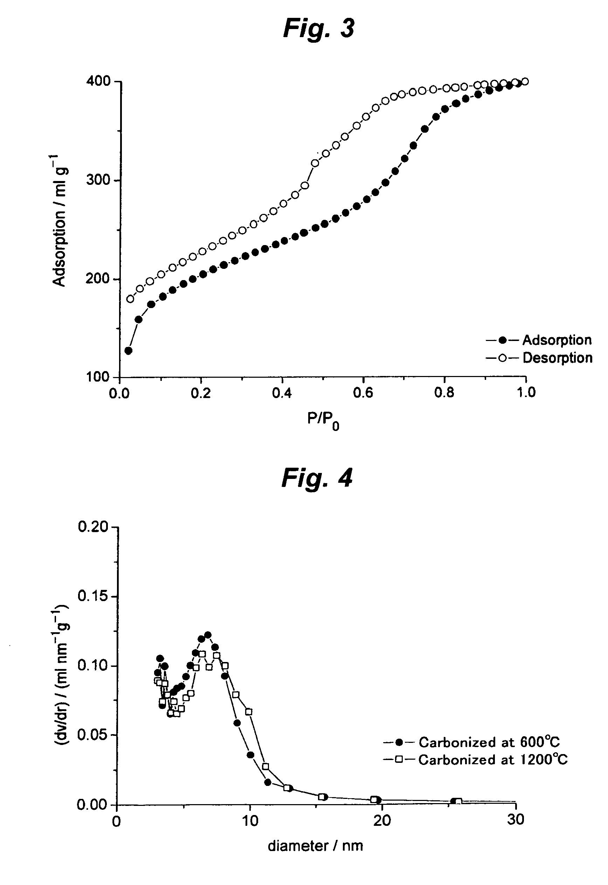

Separately, the measurement of adsorption of nitrogen to the mesoporous carbon membrane obtained above was made, using an independent multi-port-type specific surface area/pore distribution measuring device (trade name: QUADRASORB SI, manufactured by Qantachrome). As a pretreatment, the sample was dried at 200°C under vacuum for 2 hours, and 0.0180 g of mesoporous carbon membrane for measurement was obtained. The nitrogen adsorption isotherm shown in Fig. 3 had a hysteresis between adsorption and desorption, and it was therefore found that a mesostructure was present.

The adsorption-side isotherm was analyzed by the BJH method. The pore distribution curve is shown in Fig. 4. It can be seen from Fig. 4 that the average pore diameter was 7 to 8 nm. Further, the BET specific surface area was as high as 746 m²/g. It is presumed that such a high specific area was derived from the mesoporous structure.

### (Observation of section of the mesoporous carbon membrane)

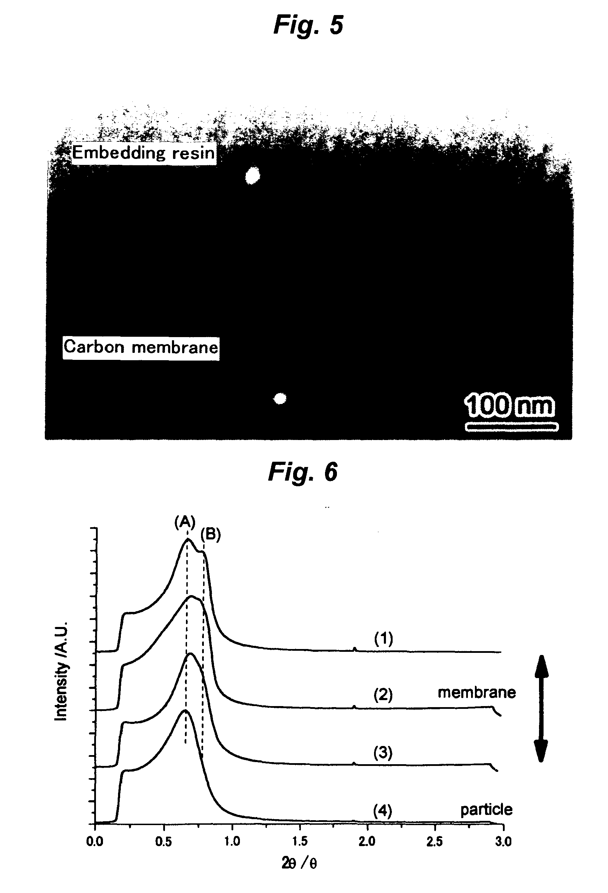

Furthermore, the mesoporous carbon membrane obtained above was embedded in a thermosetting resin, followed by abrading with a cross section polisher (trade name: SM-09010, manufactured by JEOL, LTD.) by argon ions, to prepare a sample for sectional observation. The thus-prepared sample was utilized in observation, to find that the mesostructure in which mesopores were arranged vertically was observed (Fig. 5). Specifically, Fig. 5 is a photograph of the cross section obtained by abrading, by argon ions, the carbon membrane embedded in a resin. The upper half of the photograph shows the embedding resin and the lower half of the photograph presents the carbon membrane. It can be sufficiently observed from Fig. 5 that mesostructures (mesopores) were arranged vertically in the carbon membrane.

### (Small-angle X-ray diffraction measurement of the mesoporous carbon membrane)

Separately, using a small-angle X-ray scattering measuring device (trade name: Nano Viewer, manufactured by RIGAKU), the X-ray structure analysis was conducted with respect to the oriented mesoporous carbon membrane obtained above. Fig. 6 shows the results of the measurement of the small-angle XRD measurement. From Fig. 6, two peaks were observed in the oriented carbon membrane ((A) and (B) in Fig. 6). In (A), 2θ = 0.654°, and in (B), 2θ = 0.775°. From the wavelength (0.154 nm) of the X-ray (CuKα) utilized in the measurement, (A) is a peak corresponding to the structure: d = 13.5 nm, which almost corresponds to the distance between walls, and (B) is a peak corresponding to the structure: d = 11.4 nm. The X-ray diffraction patterns (1) to (3) are those obtained by the measurements by rotating the identical membrane sample to the axis of the X-ray. It can be inferred that the peak (B) is a peak derived from the structure of the membrane in the direction of the normal line, since the measured strength thereof was varied along with the rotation of the membrane. In comparison with mesoporous carbon particles, which were synthesized using a precursor of the same formulation as in the membrane of the present invention (but synthesized without applying to an alumina film) (XRD pattern of (4) in the figure), it can be understood that the carbon membrane obtained above according to the present invention had quite higher orientation, since the peak (B) did not exist in the case of the particles (pattern (4)).

### (Heat resistance of the mesoporous carbon membrane)

To the mesoporous carbon membrane obtained above, the carbonization was conducted at a higher temperature, for the purpose of improving the physical and chemical strength and imparting a higher electric conductivity to the membrane. The heat treatment was carried out by heating the sample obtained in Example 1 at a temperature rise rate of 4°C/min up to 1,200°C from ambient temperature under an argon atmosphere, and then keeping the sample at 1,200°C for 3 hours. The nitrogen adsorption characteristics of the carbon mesoporous membrane obtained were tested and evaluated in the same manner as in the above. The results are also shown in Fig. 4. As can be seen from Fig. 4, the pore diameter distribution was almost same as that of the sample carbonized at 600°C, and the pore structure of the mesoporous carbon membrane of the present invention is kept even if it is heated to 1,200°C, showing that the mesoporous carbon membrane of the present invention is quite excellent in heat resistance.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2008-067013 filed in Japan on March 17, 2008, which is entirely herein incorporated by reference.

## Claims

1. A self-standing mesoporous carbon membrane which is obtainable by combining the following steps and has an ordered mesoporous structure in which mesopores are oriented in a direction perpendicular to a surface plane:
(i) applying a mixture of a surfactant and a carbon precursor composed of a thermosetting resin precursor and a crosslinking agent therefor, to the surface of a substrate, to form a membrane of the mixture;
(ii) drying the membrane at 15 to 30°C under the atmospheric pressure;
(iii) heating the dried membrane, to cause polymerization of the carbon precursor;
(iv) baking to carbonize the polymerized membrane;
(v) peeling the baked and carbonized membrane from the substrate; and
(vi) baking further to carbonize the peeled carbon membrane that is self-standing.

2. The self-standing mesoporous carbon membrane according to claim 1, wherein the substrate is porous alumina.

3. The self-standing mesoporous carbon membrane according to claim 1, wherein the thermosetting resin precursor is a phenol or its derivative and the crosslinking agent is an aldehyde or its derivative.

4. A method of preparing a self-standing mesoporous carbon membrane, comprising the steps of:
(i) applying a mixture of a surfactant and a carbon precursor composed of a thermosetting resin precursor and a crosslinking agent therefor, to the surface of a substrate, to form a membrane of the mixture;
(ii) drying the membrane at 15 to 30°C under the atmospheric pressure;
(iii) heating the dried membrane, to cause polymerization of the carbon precursor;
(iv) baking to carbonize the polymerized membrane;
(v) peeling the baked and carbonized membrane from the substrate; and
(vi) baking further to carbonize the peeled carbon membrane that is self-standing,
